Europäisches Patentamt

European Patent Office

Office européen des brevets

(19)

(11) Veröffentlichungsnummer: **0 048 238 B1**

(12) **EUROPÄISCHE PATENTSCHRIFT**

(45) Veröffentlichungstag der Patentschrift:
02.01.85

(21) Anmeldenummer: 81890144.9

(22) Anmeldetag: 26.08.81

(51) Int. Cl.³: **B 65 G 47/06,** B 65 G 47/54, B 21 B 43/00

(54) Einrichtung zum Transport von langgestreckten Gütern.

(30) Priorität: 11.09.80 AT 4567/80

(43) Veröffentlichungstag der Anmeldung:
24.03.82 Patentblatt 82/12

(45) Bekanntmachung des Hinweises auf die Patenterteilung:
02.01.85 Patentblatt 85/1

(84) Benannte Vertragsstaaten:
BE CH DE FR GB IT LI LU NL SE

(56) Entgegenhaltungen:
DE - A - 1 452 147
DE - B - 1 110 116
DE - B - 1 258 792
DE - B - 1 261 060
US - A - 2 896 796
US - A - 3 605 981

(73) Patentinhaber: VOEST-ALPINE Aktiengesellschaft, Werksgelände, A-4010 Linz (AT)

(72) Erfinder: Kagerhuber, Franz, Neubauerstrasse 34, A-4063 Hörsching (AT)
Erfinder: Schubert, Hermann, Dornacherstrasse 8, A-4045 Linz (AT)

(74) Vertreter: Wolfram, Gustav, Dipl.-Ing. et al, Schwindgasse 7 P.O. Box 205, A-1041 Wien (AT)

BUNDESDRUCKEREI BERLIN

**Beschreibung**

Die Erfindung betrifft eine Einrichtung zum Transport von langgestreckten Gütern, insbesondere Knüppeln, Blooms oder Brammen, mit einer die unmittelbar nebeneinanderliegenden Güter aufnehmenden Ablage, die mit einer die Güter quer zu ihrer Längserstreckung fördernden Quer-Fördereinrichtung ausgestattet ist, und mit einer am Ende der Ablage ein einzelnes Gut aufnehmenden und sich in seiner Längsrichtung senkrecht zur Quer-Fördereinrichtung bewegenden Längs-Fördereinrichtung.

Eine Einrichtung dieser Art kommt insbesondere bei einem Kühlbett in Verwendung, von dem aus die Güter auf einen Ofenrollgang befördert werden. Die Güter liegen dabei ohne Zwischenräume nebeneinander und werden über das Kühlbett mittels einer als Abschieber ausgebildeten Quer-Fördereinrichtung in Querrichtung weiterbewegt.

Will man nun ein einzelnes Gut zum Ofenrollgang in Längsrichtung bewegen, so steht man vor dem Problem, daß die aneinanderliegenden Güter infolge Berührung hängenbleiben und die Reibungsverhältnisse der Längs-Fördereinrichtung oft nicht ausreichen, um ein einzelnes Gut von den aneinanderliegenden Gütern wegzubewegen. Es kommt hierbei oftmals zu Betriebsstörungen.

Um solche Betriebsstörungen zu vermeiden ist es bekannt (DE-OS 1 452 147) ein einzelnes Gut von den aneinanderliegenden Gütern mittels einer schwenkbaren Magnetplatte wegzubewegen und mit einem Ende zu einem Rollgang zu fördern, welcher Bewegungsablauf von Schwenkarmen, die dieses weggeschwenkte Gut untergreifen, unterstützt wird.

Ein Nachteil dieser bekannten Einrichtung ist darin zu sehen, daß sie nur für besonders leichtes Gut, wie z. B. kleinere Winkelprofile, geeignet ist und daß es nicht sichergestellt werden kann, daß jeweils tatsächlich nur ein einzelnes Gut von der Magnetplatte erfaßt wird.

Die Erfindung bezweckt die Vermeidung dieser Nachteile und Schwierigkeiten und stellt sich die Aufgabe, eine Einrichtung der eingangs bezeichneten Art zu schaffen, die ein sicheres Trennen eines einzelnen Gutes von den aneinanderliegenden Gütern ermöglicht, und zwar auch dann, wenn schwere Güter, wie z. B. Knüppel, Blooms oder Brammen, transportiert werden sollen, und bei der beim Längsfördern des einzelnen Gutes keine Reibung zwischen diesem und den aneinanderliegenden Gütern auftritt.

Diese Aufgabe wird erfindungsgemäß dadurch gelöst, daß im Abstand vom Ende der Ablage ein Anschlag für das Gut vorgesehen ist, wobei die zwischen dem Ende der Ablage und dem Anschlag vorgesehene Längs-Fördereinrichtung mittels einer Schrägführung zusammen mit einem einzelnen Gut in schräger Richtung über den Anschlag hinaus und von dem Ende (6) der Anlage (2) weg heb- bzw. senkbar ist.

Nach einer bevorzugten Ausführungsform ist der Anschlag im Querschnitt stufenförmig ausgebildet, wodurch eine grobe Seitenführung für das mit der Längs-Fördereinrichtung bewegte Gut vorhanden ist.

Zweckmäßig ist die Längs-Fördereinrichtung aus längs eines Trägers angeordneten Förderrollen gebildet, die mit dem Träger gemeinsam mittels Druckmittelzylinder heb- und senkbar sind, wodurch ein gleichmäßiges Fördern mit der Längs-Fördereinrichtung sichergestellt ist.

Eine besonders platzsparende Bauweise wird dadurch ermöglicht, daß die Förderrollen Ausnehmungen des stufenförmigen Anschlags während des Heb- bzw. Senkvorganges durchsetzen.

Eine bevorzugte Ausführungsform ist dadurch gekennzeichnet, daß die Schrägführung als Gelenkviereck, insbesondere als Gelenkparallelogramm ausgebildet ist.

Gemäß einer weiteren Ausführungsform ist zweckmäßig die Schrägführung als Gleitbahn ausgebildet.

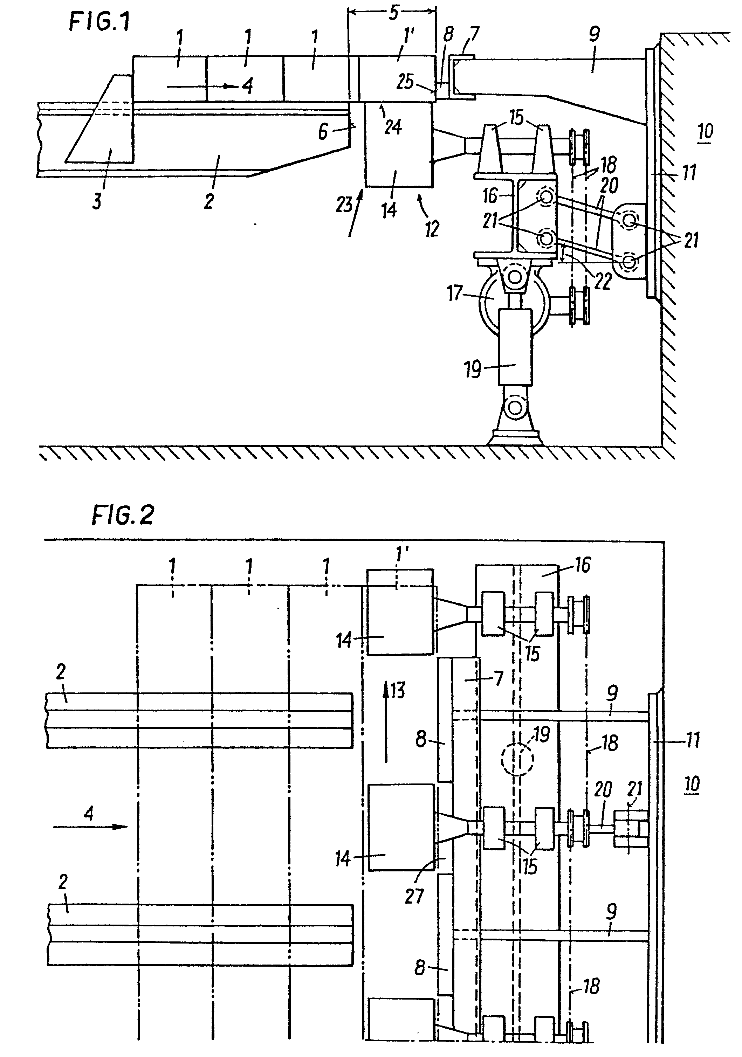

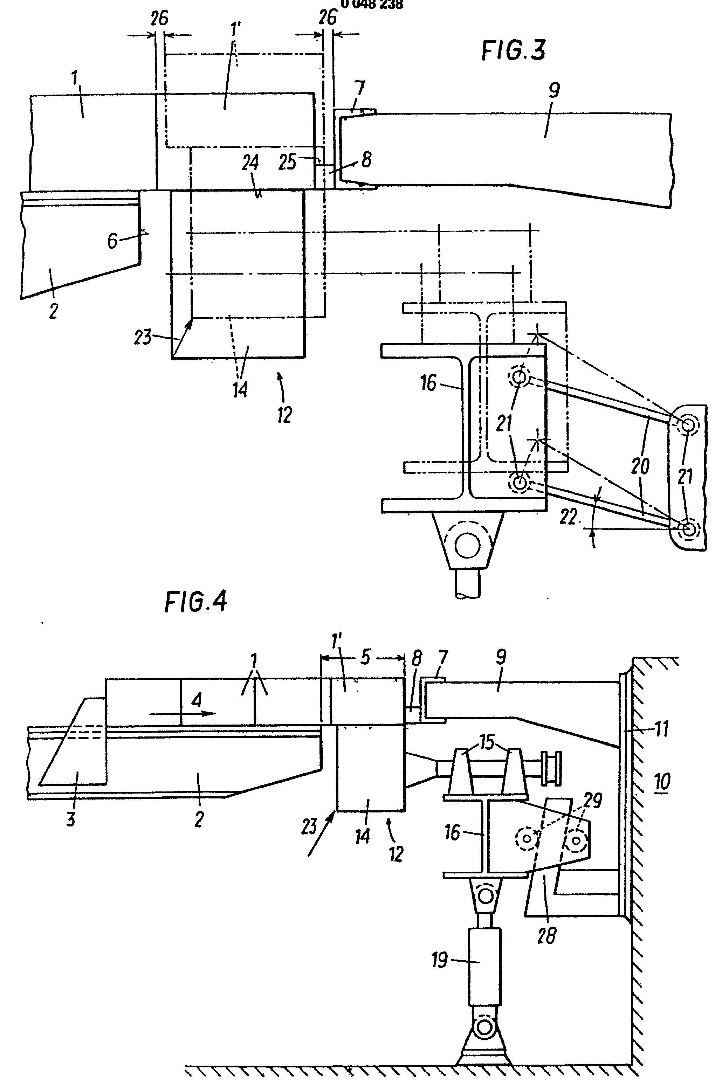

Die Erfindung ist nachstehend anhand der Zeichnung an zwei Ausführungsformen näher erläutert, wobei Fig. 1 eine Ansicht der Anlage in Längs-Förderrichtung und Fig. 2 einen Grundriß zeigen. Fig. 3 veranschaulicht in zu Fig. 1 analoger Darstellung den Bewegungsablauf der erfindungsgemäßen Einrichtung in vergrößertem Maßstab. Eine zweite Ausführungsform ist in Fig. 4, die ebenfalls eine Ansicht in Längs-Förderrichtung zeigt, dargestellt.

Die aneinandergereihten Güter 1, 1' — bei dem dargestellten Ausführungsbeispiel handelt es sich um Knüppel — liegen auf Querträgern 2 auf, die ein Kühlbett bilden. Ein Abschieber 3 sorgt für den Transport in Quer-Förderrichtung 4, er stellt somit eine Quer-Fördereinrichtung dar, sein Antrieb ist konventionell und in den Figuren nicht dargestellt. Im Quer-Abstand 5 vom Ende 6 des Kühlbettes befindet sich ein an einer Längstraverse 7 befestigter Anschlag 8. Die Längstraverse 7 ist mittels Stützarmen 9 an einem mit dem Fundament 10 verbundenen Fundamentrahmen 11 befestigt. Zwischen dem Ende 6 des Kühlbettes und dem Anschlag 8 befindet sich die Längs-Fördereinrichtung 12. Sie wird aus in Längs-Förderrichtung 13 hintereinanderliegenden antreibbaren Förderrollen 14 gebildet, deren Lager 15 an einem doppelt-T-förmigen Träger 16 montiert sind, und zwar an der Oberseite dieses Trägers. An der Unterseite dieses Trägers 16 ist ein Antriebsmotor 17 vorgesehen, von dem aus die Förderrollen 14 über Ketten 18 oder Riemen angetrieben werden.

Dieser Träger 16 ist mittels Druckmittelzylinder 19 heb- und senkbar, wobei die Druckmittelzylinder sowohl am Träger 16 als auch am Fundament 10 unterhalb des Trägers angelenkt sind. Zur Führung des Trägers 16 ist dieser mittels zweier Schwingen 20 am Fundamentrahmen 11 angelenkt. Der Fundamentrahmen 11 bildet dabei den Steg eines Gelenkparallelogramms, der Träger 16 selbst stellt die Koppel dar. Die Gelenkachsen 21 dieses Gelenkparallelogramms erstrecken sich in Längs-Förderrichtung 13. Befinden sich die Förderrollen 14 in Höhe des Kühlbettes, d. h. in abgesenkter Position (Fig. 1), so sind die Schwingen 20 um einen geringen Winkel 22 nach oben gerichtet.

Die Funktion der Einrichtung ist folgende: Die auf dem Kühlbett liegenden Knüppel 1, 1' werden mittels des Abschiebers 3 in Quer-Förderrichtung 4 zur Längs-Fördereinrichtung 12, deren Förderrollen 14 sich in abgesenkter Position, wie in Fig. 1 dargestellt, befinden, gefördert. Der dort als erster ankommende Knüppel 1' wird durch den Anschlag 8 gestoppt. Der Abschieber 3 wird nach dem Stoppen des Knüppels 1' stillgesetzt. Anschließend wird die Längs-Fördereinrichtung 12 mittels der Druckmittelzylinder 19 gehoben, wobei infolge der besonderen Anordnung der Schwingen 20 die Längs-Fördereinrichtung in schräger Richtung 23 nach oben bewegt wird. Die Schwingen 20 stellen demnach eine Schrägführung für die Längs-Fördereinrichtung 12 dar.

Wie insbesondere aus Fig. 3 ersichtlich ist, wird der am Anschlag 8 anliegende Knüppel 1' mittels der Förderrollen zunächst vertikal nach oben gehoben, und zwar so lange, bis er mit seiner Unterseite 24 genau in Höhe der Oberkante 25 des Anschlags 8 liegt. Anschließend daran wird er durch weiteres Anheben der Längs-Fördereinrichtung 12 wie diese in schräger Richtung 23 weitergehoben, so daß er in angehobener Stellung der Längs-Fördereinrichtung, die in Fig. 3 mit strichpunktierten Linien dargestellt ist, in geringem Abstand 26 vom letzten noch am Kühlbett liegenden Knüppel 1 zu liegen kommt. Die Förderrollen 14 durchsetzen bei diesem Hochheben Ausnehmungen 27 des Anschlages 8.

Wie aus Fig. 3 weiters ersichtlich ist, wird die Längs-Fördereinrichtung soweit gehoben, bis der Knüppel 1' etwa mittig zwischen der Längstraverse 7, die die Anschläge 8 trägt, und dem letzten am Kühlbett liegenden Knüppel 1 liegt. Die Längstraverse 7 und der letzte am Kühlbett liegende Knüppel 1 stellen während des Längsförderns des hochgehobenen Knüppels eine grobe Seitenführung für diesen dar.

Bei der in Fig. 4 dargestellten Ausführungsform sind anstelle der als Schwingen 20 ausgebildeten Schrägführung Gleitbahnen 28 vorgesehen, entlang denen der die Förderrollen 14 tragende Träger 16 mittels Gleitrollen 29 bewegbar ist. Die Neigung dieser Gleitbahnen 28 ist so gewählt, daß im angehobenen Zustand der Längs-Fördereinrichtung der Knüppel wieder mittig zwischen dem letzten auf dem Kühlbett befindlichen Knüppel 1 und der Längstraverse 7 liegt.

Die Erfindung beschränkt sich nicht auf die in der Zeichnung dargestellten Ausführungsbeispiele, sondern es ist beispielsweise auch möglich, durch Absenken der Längs-Fördereinrichtung eine Vereinzelung der Güter zu erreichen.

**Patentansprüche**

1. Einrichtung zum Transport von langgestreckten Gütern (1, 1'), insbesondere Knüppel, Blooms oder Brammen, mit einer die unmittelbar aneinanderliegenden Güter aufnehmenden Ablage (2), die mit einer die Güter quer zu ihrer Längserstreckung fördernden Quer-Fördereinrichtung (3) ausgestattet ist, und mit einer am Ende (6) der Ablage ein einzelnes Gut aufnehmenden und sich in seiner Längsrichtung senkrecht zur Quer-Fördereinrichtung bewegenden Längs-Fördereinrichtung (12), dadurch gekennzeichnet, daß im Abstand (5) vom Ende (6) der Ablage (2) ein Anschlag (8) für das Gut (1, 1') vorgesehen ist, wobei die zwischen dem Ende (6) der Ablage und dem Anschlag (8) vorgesehene Längs-Fördereinrichtung (12) mittels einer Schrägführung (20, 28) zusammen mit einem einzelnen Gut (1') in schräger Richtung (23) über den Anschlag (8) hinaus und von dem Ende (6) der Ablage (2) weg heb- bzw. senkbar ist.

2. Einrichtung nach Anspruch 1, dadurch gekennzeichnet, daß der Anschlag (7, 8) im Querschnitt stufenförmig ausgebildet ist.

3. Einrichtung nach Anspruch 1 oder 2, dadurch gekennzeichnet, daß die Längs-Fördereinrichtung (12) aus längs eines Trägers (16) angeordneten Förderrollen (14) gebildet ist, die mit dem Träger (16) gemeinsam mittels Druckmittelzylinder (19) heb- und senkbar sind.

4. Einrichtung nach Anspruch 3, dadurch gekennzeichnet, daß die Förderrollen (14) Ausnehmungen (27) des stufenförmigen Anschlags (7, 8) während des Heb- bzw. Senkvorganges durchsetzen.

5. Einrichtung nach den Ansprüchen 1 bis 4, dadurch gekennzeichnet, daß die Schrägführung als Gelenkviereck, insbesondere als Gelenkparallelogramm (11, 20, 16) ausgebildet ist.

6. Einrichtung nach den Ansprüchen 1 bis 4, dadurch gekennzeichnet, daß die Schrägführung als Gleitbahn (28) ausgebildet ist.

**Claims**

1. An arrangement for transporting elongated products (1, 1'), in particular billets, blooms or slabs, comprising a tray (2) accomodating the immediately adjacent products and equipped with a transverse conveying means (3) conveying the products transversely to their longitudinal extensions, and a longitudinal conveying means (12) accomodating a single product at the end (6) of the tray and moving in its logitudinal direction perpendicular to the transverse conveying means, characterised in that a stop (8) for the product (1, 1') is provided at a distance (5) from the end (6) of the tray (2), the longitudinal conveying means (12), which is provided between the end (6) of the tray and the stop (8), being liftable and lowerable in an oblique direction (23) beyond the stop (8) and off the end (6) of the tray (2) by means of an oblique guide (20, 28), together with a single product (1').

2. An arrangement according to claim 1, characterised in that the stop (7, 8) is stepped in cross section.

3. An arrangement according to claim 1 or 2, characterised in that the longitudinal conveying means (12) is formed by conveying rollers (14) arranged along a carrier (16) and liftable and lowerable commonly with the carrier (16) by means of pressure medium cylinders (19).

4. An arrangement according to claim 3, characterised in that the conveying rollers (14) penetrate recesses (27) of the stepped stop (7, 8) during lifting and lowering.

5. An arrangement according to claims 1 to 4, characterised in that the oblique guide is designed as a four-bar linkage, in particular as a four-bar linkage parallelogramm (11, 20, 16).

6. An arrangement according to claims 1 to 4, characterised in that the oblique guide is designed as a slideway (28).

## Revendications

1. Installation pour transporter des produits (1, 1') de forme allongée, en particulier des billettes, des blooms ou des brames, comprenant un dépôt (2) recevant les produits, qui sont juxtaposés en se touchant mutuellement, et équipé d'un dispositif de transport en travers (3), transportant les produits transversalement au sens de leur longueur, ainsi qu'un dispositif de transport en long (12) prévu à la fin (6) du dépôt, recevant chaque fois un seul produit et qui est mobile longitudinalement, transversalement au dispositif de transport en travers, caractérisé en ce qu'une butée (8) pour le produit (1, 1') est prévue à distance (5) de la fin (6) du dépôt (2) et que le dispositif de transport en long (12), placé entre la fin (6) du dépôt et la butée (8), peut être soulevé en biais (23), ensemble avec un seul produit (1, 1'), jusqu'au-dessus de la butée (8) et dans le sens de l'éloignement de la fin (6) du dépôt (2), et peut être abaissé au moyen d'un dispositif de guidage en biais (20, 28).

2. Installation selon la revendication 1, caractérisée en ce que la butée (7, 8) est à gradins en section droite.

3. Installation selon la revendication 1 ou 2, caractérisée en ce que le dispositif de transport en long (12) est constitué de rouleaux transporteurs (14) disposés le long d'une poutre (16) et susceptibles d'être soulevés et abaissés, ensemble avec la poutre (16), au moyen de vérins (19) commandés par un fluide de pression.

4. Installation selon la revendication 3, caractérisée en ce que les rouleaux transporteurs (14) passent par des évidements (27) de la butée à gradins (7, 8) pendant le soulèvement et l'abaissement.

5. Installation selon les revendications 1 à 4, caractérisée en ce que le dispositif de guidage en biais est un quadrilatère articulé, en particulier un parallélogramme articulé (11, 20, 16).

6. Installation selon les revendications 1 à 4, caractérisé en ce que le dispositif de guidage en biais et réalisé sous forme d'une glissière (28).

**FIG.1**

**FIG.2**

5

0 048 238

FIG.3

FIG.4